# EUROPÄISCHE PATENTSCHRIFT

(11) **EP 1 687 244 B1**
(45) Veröffentlichungstag und Bekanntmachung des Hinweises auf die Patenterteilung: **18.07.2007**
(21) Anmeldenummer: 04803303.9
(22) Anmeldetag: 26.11.2004
(51) Int. Cl.: C04B 20/00, C04B 20/10, C04B 38/06

(54) **ISOLATIONSMATERIAL**
INSULATION MATERIAL
MATERIAU D'ISOLATION

(30) Priorität: 28.11.2003 DE 10355668
(43) Veröffentlichungstag der Anmeldung: 09.08.2006
(73) Patentinhaber: Leibniz-Institut für Neue Materialien gemeinnützige GmbH, 66123 Saarbrücken (DE)
(72) Erfinder: ENDRES, Klaus, 66424 Homburg (DE); SCHMIDT, Helmut, 66130 Saarbrücken-Güdingen (DE); REINHARD, Bernd, 66663 Merzig-Brotdorf (DE); GOEDICKE, Stefan, 66540 Neunkirchen (DE)
(74) Vertreter: Barz, Peter
(86) Internationale Anmeldenummer: PCT/EP2004/013448
(87) Internationale Veröffentlichungsnummer: WO 2005/051863

(56) Entgegenhaltungen:
- EP-A- 0 310 138
- EP-A- 1 348 831
- WO-A-03/040243

## Beschreibung

Die vorliegende Erfindung betrifft ein Isolationsmaterial aus einer anorganischen, porösen Matrix und Verfahren zu dessen Herstellung und dessen Verwendung.

Bei anorganischen Isolationsmaterialien besteht häufig das Problem, dass sie mit verschiedenen Unzulänglichkeiten behaftet sind. So ist zum Beispiel bei Isolationsmaterialien, die in einem relativ großen Temperaturbereich eingesetzt werden können, die Formbarkeit zur gewünschten Geometrie ein Problem, so dass die Herstellung teuer ist oder auf eine einfachere Geometrie angepasst werden muss. In der Regel ist die Isolierwirkung im Vergleich zu typischen organischen Isoliermassen wie Polymerschaum (z. B. Styropor^{®}) auch deutlich geringer.

Bei einigen Isolationsmaterialien nach dem Stand der Technik wird u.a. Glas, z.B. in Form von Glasschäumen, eingesetzt. Da übliches Glas in der Regel bei etwa 500 bis 600°C, spätestens bei 700°C erweicht oder schmilzt, kann diese Temperaturgrenze bei üblichen Isolationsmaterialien, die Glas beinhalten, gewöhnlich nicht überschritten werden. Hinzu kommt, dass perkolierende Glasstege im Vergleich zu porösen Verbindungen viel weniger isolierend sind. Eine Bearbeitbarkeit und nachträgliche Formgebung ist in der Regel nicht möglich, so dass nur einfache Geometrien zugänglich sind. Es besteht aber auch Bedarf nach preiswerten, hoch isolierenden Isolationsmaterialien, die auch bei höheren Temperaturen einsetzbar sind.

Die erfindungsgemäße Aufgabe bestand daher darin, leicht formbare Isolationsmaterialien bereitzustellen, die eine hohe Temperaturbeständigkeit bei gleichzeitig hoher Isolierwirkung aufweisen und auch für Temperaturen von mehr als 500 bzw. mehr als 700°C einsetzbar sind. Ferner sollten die Isolationsmaterialien und das eingesetzte Verfahren wirtschaftlich sein und eine komplexe Geometrie ermöglichen.

Die erfindungsgemäße Aufgabe konnte gelöst werden durch ein Isolationsmaterial umfassend eine anorganische, poröse Matrix, in der durch einen Porenbildner zusätzliche Poren gebildet werden, das aus einer Zusammensetzung erhältlich ist, die ein die poröse Matrix bildendes Bindemittel und einen porenbildenden. Füllstoff umfasst. Das Bindemittel umfasst ein Sol, das Nanopartikel und/oder einen anderen gegebenenfalls organisch modifizierten anorganischen, eine poröse Struktur bildenden Precursor enthält. Das Sol kann mit üblichen Verfahren stabilisiert sein, z. B. über die Einstellung eines geeigneten ζ-Potenzials. Eine andere Form der Stabilisierung des Sols stellt die Oberflächenmodifikation der Sol-Partikel dar, z. B. mit einem oder mehreren Silanen der allgemeinen Formel

RₙSiX₄₋ₙ (I)

worin die Gruppen X gleich oder verschieden sind und hydrolysierbare Gruppen oder Hydroxylgruppen sind, die Rest R gleich oder verschieden sind und Alkyl, Alkenyl, Alkinyl, Aryl, Aralkyl oder Alkylaryl sind und n 0, 1, 2 oder 3 ist. Es können auch andere Oberfächenmodifikatoren verwendet werden, sofern sie über eine ausreichende Bindungsfestigkeit zur Nanopartikeloberfläche verfügen, wie z. B. β-Diketone, organische Säuren, Aminosäuren oder Proteine. Weiterhin können dem Bindemittel noch weitere organische Komponenten, wie z. B. Oligomere oder dergleichen, zur Einstellung einer zweckmäßigen Rheologie beigemischt werden. Als vorteilhaft haben sich auch die Zugabe von Silanen des Typs SiX₄ (X wie vorstehend definiert) und von Alkoxiden des Typs MX_{b}, wobei b die Wertigkeit des Zentralatoms aufweist und M wie nachstehend definiert sein kann, erwiesen.

Zur Erzielung der ausgezeichneten Isolierwirkung wird dem Bindemittel ein Feststoff zugegeben, der in der Lage ist, eine weitere Porenstruktur aufzubauen. Dazu können beispielsweise Mikrohohlglaskugeln, aber auch andere Poren bildende Füllstoffe herangezogen werden, die sich z.B. in der Hitze zersetzen oder verflüchtigen und so Poren hinterlassen, z.B. sich verflüchtigende Salze wie NH₄Cl oder organische Pulver, wie z.B. Holzmehl, Mehl und Polymerkügelchen.

Überraschenderweise bildet nun gerade die Kombination aus dem oben genannten Bindemittel und dem Poren bildenden Füller eine gut formbare, gießbare Masse, die gegebenenfalls auch bei Raumtemperatur aushärten kann und die gegebenenfalls bei höheren Temperaturen durch Ausbrennen organischer Bestandteile, sofern vorhanden, in ein rein anorganisches Material überführt werden kann.

Es eignet sich sowohl für Beschichtungen als auch für Formkörper. Die Temperaturstabilität lässt sich durch den Einsatz refraktärer Materialien sogar noch erhöhen. Die eingesetzten Komponenten selbst sind relativ preiswert und ermöglichen den Einsatz einfacher und preiswerter Verfahren zur Formgebung.

Dementsprechend stellt die vorliegende Erfindung ein Isolationsmaterial bereit, das eine anorganische, poröse Matrix umfasst, wobei das Isolationsmaterial erhältlich ist, indem man eine Zusammensetzung, die a) ein Nanopartikel und/oder Polykondensate oder Vorstufen davon enthaltendes Sol als Bindemittel und b) feste Porenbildner umfasst, formt oder auf ein Substrat aufbringt und die Zusammensetzung unter Bildung der porösen Matrix und von durch den Porenbildner gebildeten zusätzlichen Poren härtet. Das Bindemittelsol ist ein eine poröse, feste, anorganische Bindephase bildendes Sol. Durch den Porenbildner werden in die poröse Matrix zusätzliche Poren eingebaut, wodurch eine heteroporöse Matrix gebildet wird.

Die zusätzlichen Poren in der Matrix können durch das erfindungsgemäße Verfahren auf einfache Weise durch geeignete Wahl des Porenbildners und der eingesetzten Menge den gewünschten Eigenschaften, z.B. bezüglich der Porengröße, angepasst werden. Bei den zusätzlichen Poren handelt es sich bevorzugt um Makroporen, d.h. mit einem mittleren Porendurchmesser von mehr als 50 nm. Gewöhnlich ist der mittlere Porendurchmesser aber mindestens 300 nm und insbesondere mindestens 0,5 µm. Bevorzugt weist das erfindungsgemäße Isolationsmaterial zusätzliche Poren in der Matrix mit einem mittleren Porendurchmesser im Mikrometerbereich, also etwa 1 µm oder größer, z.B. 1 µm bis 1.000 µm, bevorzugt etwa 1 µm bis 500 µm, auf.

Der Porendurchmesser wird bevorzugt durch Hg-Porosimetrie bestimmt. Andere Möglichkeiten sind z.B. das BET-Verfahren und die Elektronenmikroskopie. Je nach Größenordnung der Poren (z.B. bei den kleinen Poren der Matrix) können andere Messverfahren zweckmäßiger sein. Sofern Hg-Porosimetrie sich nicht eignet, können die z.B. in Ullmanns Encyklopädie der technischen Chemie, 4. Auflage, Bd. 5, Seiten 751 und 752 beschriebenen Verfahren angewendet werden. Eine indirekte Abschätzung bzw. Bestimmung ergibt sich für die zusätzlichen Poren aus dem Innendurchmesser der Hohlkörper bzw. dem mittleren Teilchendurchmesser der eingesetzten wärmezersetzbaren oder verdampfbaren Teilchen, sofern sich während der Herstellung des Isolationsmaterials keine Abweichungen ergeben.

Der mittlere Porendurchmesser der porösen Matrix ist gewöhnlich kleiner als der mittlere Porendurchmesser der zusätzlichen Poren, bevorzugt deutlich kleiner, z.B. ist der mittlere Porendurchmesser der zusätzlichen Poren aus dem Porenbildner z.B. mindestens um das 3-fache, bevorzugt mindestens um das 5-fache größer als der mittlere Porendurchmesser der porösen Matrix. Die Poren der Matrix sind in der Regel Feinporen im sub-µm-Bereich (kleiner 1 µm). Entsprechend der Nomenklatur von IUPAC handelt es sich um eine mikro-, meso- oder makropörose Matrix, wobei der mittlere Porendurchmesser bevorzugt unter 200 nm, besonders bevorzugt unter 50 nm (mesoporös) und ganz bevorzugt unter 2 nm (mikroporös) liegt.

Die Porengröße der Matrix kann auch, falls notwendig, an einer unter gleichen Bedingungen hergestellten Probe, wobei aber kein Porenbildner eingesetzt wird, ermittelt werden. Diese Ergebnisse können wiederum bei der Bestimmung der Größe der zusätzlichen Poren berücksichtigt werden, falls notwendig.

Das Volumenverhältnis von Gesamtvofumen der Poren (Matrixporen + zusätzliche Poren) zu Matrix im fertigen Isolationsmaterial ist bevorzugt so, dass mindestens 10 Vol-% Poren und entsprechend höchstens 90 Vol-% Matrix, bevorzugt mindestens 12 Vol.-% Poren und höchstens 88 Vol-% Matrix und besonders bevorzugt mindestens 15 Vol-% Poren und höchstens 85 Vol-% Matrix vorliegen. Eine zweckmäßige Höchstgrenze für das Volumenverhältnis liegt bei höchstens 95 Vol-% Poren und mindestens 5 Vol-% Matrix. Bei Vorliegen von Hohlkörpern wird das den Hohlraum oder die Hohlräume umschließende Material hierbei zum Matrixvolumen gerechnet. In der Regel ist der Volumenanteil der zusätzlichen Poren deutlich größer als der Volumenanteil der Matrixporen.

Die erfindungsgemäß eingesetzte Zusammensetzung umfasst ein Sol von Nanopartikeln und/oder von Polykondensaten oder Vorstufen davon. Bei Nanopartikeln handelt es sich um nanoskalige, anorganische Feststoffteilchen. Bevorzugt handelt es sich um Nanopartikel aus Metall, einschließlich Metalllegierungen, Metallverbindungen, insbesondere Metallchalkogeniden, besonders bevorzugt die Oxide und Sulfide, wobei Metalle hier auch B, Si und Ge einschließen. Es kann eine Art von Nanopartikel oder eine Mischung von Nanopartikeln eingesetzt werden.

Die Nanopartikel können aus beliebigen Metallverbindungen sein. Beispiele sind (gegebenenfalls hydratisierte) Oxide wie ZnO, CdO, SiO₂, GeO₂, TiO₂, ZrO₂, CeO₂, SnO₂, Al₂O₃ (insbesondere Böhmit, AIO(OH), auch als Aluminiumhydroxid), B₂O₃, In₂O₃, La₂O₃, Fe₂O₃, Fe₃O₄, Cu₂O, Ta₂O₅, Nb₂O₅, V₂O₅, MoO₃ oder WO₃; weitere Chalkogenide, wie z.B. Sulfide (z.B. CdS, ZnS, PbS und Ag₂S), Selenide (z.B. GaSe, CdSe und ZnSe) und Telluride (z.B. ZnTe oder CdTe); Halogenide, wie AgCl, AgBr, Agl, CuCl, CuBr, Cdl₂ und Pbl₂; Carbide wie CdC₂ oder SiC; Arseniden wie AlAs, GaAs und GeAs; Antimonide wie InSb; Nitride wie BN, AIN, Si₃N₄ und Ti₃N₄; Phosphide wie GaP, InP, Zn₃P₂ und Cd₃P₂; Phosphate, Silikate, Zirconate, Aluminate, Stannate und die entsprechenden Mischoxide (z.B. Indium-Zinn-Oxid (ITO), Antimon-Zinn-Oxid (ATO), fluor-dotiertes Zinnoxid (FTO), Leuchtpigmente mit Y- oder Eu-haltigen Verbindungen, Spinelle, Ferrite oder Mischoxide mit Perowskitstruktur wie BaTiO₃ und PbTiO₃).

Bei den Nanopartikeln handelt es sich bevorzugt um ein Oxid oder Oxidhydrat von Si, Ge, Al, B, Zn, Cd, Ti, Zr, Ce, Sn, In, La, Fe, Cu, Ta, Nb, V, Mo oder W, besonders bevorzugt von Si, Al, B, Ti und Zr. Besonders bevorzugt werden Oxide bzw. Oxidhydrate eingesetzt. Bevorzugte nanoskalige anorganische Feststoffteilchen sind SiO₂, Al₂O₃, AIOOH, Ta₂O₅, ZrO₂ und TiO₂, wobei SiO₂ am meisten bevorzugt ist.

Die Herstellung dieser nanoskaligen Teilchen kann auf übliche Weise erfolgen, z.B. durch Flammpyrolyse, Plasmaverfahren, Kolloidtechniken, Sol-Gel-Prozesse, kontrollierte Keim- und Wachstumsprozesse, MOCVD-Verfahren und Emulsionsverfahren.

Diese Verfahren sind in der Literatur ausführlich beschrieben. Das Sol-Gel-Verfahren wird nachstehend erläutert.

Die Nanopartikel können in Form eines Pulvers oder direkt als Dispersion in einem Dispergiermittel verwendet werden. Beispiele für im Handel erhältliche Dispersionen sind die wässrigen Kieselsole der Bayer AG (Levasile^{®}) sowie kolloidale Organosole von Nissan Chemicals (IPA-ST, MA-ST, MEK-ST, MIBK-ST). Als Pulver sind z.B. pyrogene Kieselsäuren von Degussa (Aerosil-Produkte) erhältlich.

Die Nanopartikeln besitzen einen mittleren Teilchendurchmesser (Volumenmittel, Messung: wenn möglich röntgenographisch, sonst dynamische Laserlichtstreuung mit einem Ultrafein-Partikelanalysator: Ultrafine Particle Analyzer (UPA), Leeds Northrup) unter 1 µm, in der Regel unter 500 nm. Die Nanopartikel besitzen bevorzugt einen mittleren Teilchendurchmesser von nicht mehr als 200 nm, bevorzugt nicht mehr als 100 nm und insbesondere nicht mehr 50 nm und mehr als 1 nm und vorzugsweise mehr als 2 nm, z.B. 1 bis 20 nm.

Die Nanopartikel liegen insbesondere in Form eines Sols oder einer Suspension vor, das mit üblichen Verfahren stabilisiert ist. Die Stabilisierung kann zum Beispiel durch Einstellung die Oberflächenladung der Partikel und damit des Zetapotenzials der Partikel erfolgen. Das Zetapotenzial kann z.B. durch pH-Änderung oder Oberflächenmodifizierung der Partikel mit geladenen Gruppen auf das geeignete Niveau eingestellt werden. Hierfür können z.B. anorganische oder organische Säuren eingesetzt werden. Eine Stabilisierung der Nanopartikel kann auch durch Oberflächenmodifizierung mit anderen Verbindungen oder Gruppen erfolgen. Die Oberflächenmodifizierung wird im folgenden erläutert.

In einer vorteilhaften Ausführungsform wird ein Nanokomposit aus oberflächenmodifizierten Nanopartikeln als Bindemittel verwendet. Das Nanokomposit aus oberflächenmodifizierten Nanopartikeln kann aus der Umsetzung von hydrolysierbaren Verbindungen oder von organischen Verbindungen mit geeigneten funktionellem Gruppen mit den Nanopartikeln erhalten werden. Die hydrolysierbaren Verbindungen können gegebenenfalls zusätzlich ein Polykondensat bilden, in das die oberflächenmodifizierten Nanopartikel eingebettet sein können.

Bei der Oberflächenmodifizierung von nanoskaligen Feststoffteilchen handelt es sich um ein bekanntes Verfahren, wie es von der Anmelderin z.B. in WO 93/21127 (DE 4212633) oder WO 96/31572 beschrieben wurde. Die Herstellung der oberflächenmodifizierten Nanopartikel kann prinzipiell auf zwei verschiedenen Wegen durchgeführt werden, nämlich zum einen durch Oberflächenmodifizierung von bereits hergestellten Nanopartikeln und zum anderen durch Herstellung dieser Nanopartikel unter Verwendung von einer oder mehreren Verbindungen, die über entsprechende funktionelle Gruppierungen verfügen. Diese beiden Wege werden in obengenannten Patentanmeldungen näher erläutert.

Als Oberflächenmodifizierungsmittel, insbesondere zur Oberflächenmodifizierung bereits vorliegender Nanopartikel, eignen sich z.B. organische Säuren oder organische Verbindungen mit anderen funktionellen Gruppen oder hydrolysierbare Silane mit mindestens einer nicht hydrolysierbaren Gruppe, die mit an der Oberfläche der Feststoffteilchen vorhandenen Gruppen reagieren und/oder (zumindest) wechselwirken können, so dass eine ausreichende Bindungsfestigkeit erreicht wird. Beispielsweise befinden sich auf Nanopartikeln, z.B. bei Metalloxiden, als Oberflächengruppen reaktionsfähige Gruppen als Restvalenzen, wie Hydroxygruppen und Oxygruppen. Eine andere Form der Oberflächenmodifikation nutzt als Bindungsprozess Komplexbindungen, polare Wechselwirkungen oder ionische Bindungen.

Eine Oberflächenmodifizierung der nanoskaligen Teilchen kann z.B. durch Mischen der nanoskaligen Teilchen mit nachstehend erläuterten geeigneten Oberflächenmodifizierungsmitteln gegebenenfalls in einem Lösungsmittel und unter Anwesenheit eines Katalysators erfolgen. Bei Silanen als Oberflächenmodifizierungsmittel genügt z.B. häufig ein mehrstündiges Rühren mit den nanoskaligen Teilchen bei Raumtemperatur zur Modifizierung. Natürlich hängen zweckmäßige Bedingungen, wie Temperatur, Mengenverhältnisse, Dauer der Umsetzung usw., von den jeweiligen speziellen Reaktionspartnern und dem gewünschten Belegungsgrad ab.

Die Oberflächenmodifizierungsmittel können z.B. kovalente, ionische (salzartige) oder koordinative Bindungen zur Oberfläche der nanoskaligen Feststoffteilchen ausbilden, während unter den reinen Wechselwirkungen beispielhaft Dipol-Dipol-Wechselwirkungen, Wasserstoffbrückenbindungen und van der Waals-Wechselwirkungen zu nennen sind. Bevorzugt ist die Ausbildung von kovalenten, ionischen und/oder koordinativen Bindungen. Unter einer koordinativen Bindung wird eine Komplexbildung verstanden. Zwischen dem Oberflächenmodifizierungsmittel und dem Partikel kann z.B. eine Säure/Base-Reaktion nach Brönsted oder Lewis, eine Komplexbildung oder eine Veresterung stattfinden.

Erfindungsgemäß bevorzugt ist es auch, dass die Oberflächenmodifizierungsmittel ein relativ niedriges Molekulargewicht aufweisen. Beispielsweise kann das Molekulargewicht weniger als 1.500, insbesondere unter 1.000 und vorzugsweise unter 500 oder unter 400 oder sogar unter 300 betragen. Dies schließt selbstverständlich ein deutlich höheres Molekulargewicht der Verbindungen nicht aus (z.B. bis zu 2.000 und mehr).

Beispiele für geeignete funktionelle Gruppen der Oberflächenmodifizierungsmittel zur Anbindung an die Nanopartikel sind Carbonsäuregruppen, Anhydridgruppen, Säureamidgruppen, (primäre, sekundäre, tertiäre und quartäre) Aminogruppen, SiOH-Gruppen, hydrolisierbare Reste von Silanen (nachstehend in Formel (I) beschriebene Gruppe SiX) und C-H-acide Gruppierungen, z.B. β-Dicarbonylverbindungen. Es können auch mehrere dieser Gruppen gleichzeitig in einem Molekül vorhanden sein (Betaine, Aminosäuren, EDTA, usw.).

Beispiele für Verbindungen, die zur Oberflächenmodifizierung verwendet werden, sind gegebenenfalls substituierte (z.B. mit Hydroxy), gesättigte oder ungesättigte Mono- und Polycarbonsäuren (vorzugsweise Monocarbonsäuren) mit 1 bis 24 Kohlenstoffatomen (z.B. Ameisensäure, Essigsäure, Propionsäure, Buttersäure, Pentansäure, Hexansäure, Acrylsäure, Methacrylsäure, Crotonsäure, Citronensäure, Adipinsäure, Bernsteinsäure, Glutarsäure, Oxalsäure, Maleinsäure und Fumarsäure) und Monocarbonsäuren mit 1 bis 24 Kohlenstoffatomen mit Etherbindungen (z.B. Methoxyessigsäure, Dioxaheptansäure und 3,6,9-Trioxadecansäure) sowie deren Anhydride, Ester (vorzugsweise C₁-C₄-Alkylester) und Amide, z.B. Methylmethacrylat.

Geeignet sind auch Aminverbindungen wie Ammoniumsalze und Mono- oder Polyamine. Beispiele für diese Oberflächenmodifikatoren sind quaternäre Ammoniumsalze der Formel NR¹R²R³R⁴⁺X⁻, worin R¹ bis R⁴ gegebenenfalls voneinander verschiedene aliphatische, aromatische oder cycloaliphatische Gruppen mit vorzugsweise 1 bis 12, insbesondere 1 bis 8 Kohlenstoffatomen darstellen, wie z.B. Alkylgruppen mit 1 bis 12, insbesondere 1 bis 8 und besonders bevorzugt 1 bis 6 Kohlenstoffatomen (z.B. Methyl, Ethyl, n- und 1-Propyl, Butyl oder Hexyl), und X- für ein anorganisches oder organisches Anion steht, z.B. Acetat, OH-, Cl⁻, Br⁻ oder I⁻; Mono- und Polyamine, insbesondere solche der allgemeinen Formel R₃₋ₙNHₙ, worin n = 0, 1 oder 2 und die Reste R unabhängig voneinander Alkylgruppen mit 1 bis 12, insbesondere 1 bis 8 und besonders bevorzugt 1 bis 6 Kohlenstoffatomen darstellen und Ethylenpolyamine (z.B. Ethylendiamin, Diethylentriamin etc.). Weitere Beispiele sind Aminosäuren; Imine; β-Dicarbonylverbindungen mit 4 bis 12, insbesondere 5 bis 8 Kohlenstoffatomen, wie z.B. Acetylaceton, 2,4-Hexandion, 3,5-Heptandion, Acetessigsäure und Acetessigsäure-C₁-C₄-alkylester, wie Acetessigsäureethylester; und hydrolysierbare Silane, wie z.B. die hydrolysierbaren Silane mit mindestens einer hydrolysierbaren Gruppen, z.B. die Silane der allgemeinen Formeln (I) und (II).

Zur Oberflächenmodifizierung der Nanopartikel können auch hydrolysierbare Silane und/oder Organosilane oder Oligomere davon eingesetzt werden, wobei besonders bevorzugt mindestens ein Silan eine nicht hydrolysierbare Gruppe aufweist. Diese Oberflächenmodifizierung mit hydrolysierbaren Silanen ist insbesondere bei SiO₂-Nanopartikeln bevorzugt. Das Nanopartikel enthaltende Nanokomposit ist demnach vorzugsweise erhältlich durch Umsetzen von Nanopartikeln mit einem oder mehreren Silanen der allgemeinen Formel:

RₙSiX₍₄₋ₙ₎ (I)

erhalten, worin die Reste X gleich oder verschieden sind und hydrolysierbare Gruppen oder Hydroxygruppen bedeuten, die Reste R gleich oder verschieden sind und nicht hydrolysierbare Gruppen darstellen und n 0, 1, 2 oder 3 ist, oder einem davon abgeleiteten Oligomer, wobei vorzugsweise für ein Silan n größer 0 ist.

In der allgemeinen Formel (1) sind die hydrolysierbaren Gruppen X, die gleich oder voneinander verschieden sein können, beispielsweise Wasserstoff oder Halogen (F, Cl, Br oder I), Alkoxy (vorzugsweise C₁₋₆-Alkoxy, wie z.B. Methoxy, Ethoxy, n-Propoxy, i-Propoxy und Butoxy), Aryloxy (vorzugsweise C₆₋₁₀-Aryloxy, wie z.B. Phenoxy), Acyloxy (vorzugsweise C₁₋₆-Acyloxy, wie z.B. Acetoxy oder Propionyloxy), Alkylcarbonyl (vorzugsweise C₂₋₇-Alkylcarbonyl, wie z.B. Acetyl), Amino, Monoalkylamino oder Dialkylamino mit vorzugsweise 1 bis 12, insbesondere 1 bis 6 Kohlenstoffatomen. Bevorzugte hydrolysierbare Reste sind Halogen, Alkoxygruppen und Acyloxygruppen. Besonders bevorzugte hydrolysierbare Reste sind C₁₋₄-Alkoxygruppen, insbesondere Methoxy und Ethoxy.

Bei den nicht hydrolysierbaren Resten R, die gleich oder voneinander verschieden sein können, kann es sich um nicht hydrolysierbare Reste R mit einer funktionellen Gruppe, über die z.B. eine Vernetzung möglich sein kann, oder um nicht hydrolysierbare Reste R ohne eine funktionelle Gruppe handeln. Der nicht hydrolysierbare Rest R ohne funktionelle Gruppe ist beispielsweise Alkyl (vorzugsweise C₁₋₈-Alkyl, wie Methyl, Ethyl, n-Propyl, Isopropyl, n-Butyl, s-Butyl und tert.-Butyl, Pentyl, Hexyl, Octyl oder Cyclohexyl), Alkenyl, Alkinyl, Aryl (vorzugsweise C₆₋₁₀-Aryl, wie z.B. Phenyl und Naphthyl) sowie entsprechende Alkylaryle und Arylalkyle. Die Reste R und X können gegebenenfalls einen oder mehrere übliche Substituenten, wie z.B. Halogen oder Alkoxy, aufweisen.

Spezielle Beispiele für funktionelle Gruppen sind z.B. die Epoxid-, Hydroxy-, Ether-, Amino-, Monoalkylamino-, Dialkylamino-, gegebenenfalls substituierte Anilino-, Amid-Carboxy-, Acryl-, Acryloxy-, Methacryl-, Methacryloxy-, Mercapto-, Cyano-, Alkoxy-, Isocyanato-, Aldehyd-, Alkylcarbonyl-, Säureanhydrid- und Phosphorsäuregruppe. Diese funktionellen Gruppen sind über Alkylen-, Alkenylen- oder Arylen-Brückengruppen, die durch Sauerstoff- oder -NH-Gruppen unterbrochen sein können, an das Siliciumatom gebunden. Die genannten Brückengruppen und gegebenenfalls vorliegende Substituenten, wie bei den Alkylaminogruppen, leiten sich z.B. von den oben bzw. nachstehend genannten Alkyl-, Alkenyl- oder Arylresten ab. Natürlich kann der Rest R auch mehr als eine funktionelle Gruppe aufweisen.

Konkrete Beispiele für nicht hydrolysierbare Reste R mit funktionellen Gruppen, über die eine Vernetzung möglich ist, sind ein Glycidyl- oder ein Glycidyloxy-(C₁₋₂₀)-alkylen-Rest, wie β-Glycidyloxyethyl, γ-Glycidyloxypropyl, δ-Glycidyloxybutyl, ε-Glycidyloxypentyl, ω-Glycidyloxyhexyl, und 2-(3,4-Epoxycyclohexyl)ethyl, ein (Meth)-acryloxy-(C₁₋₆)-alkylen-Rest, wobei (C₁₋₆)-Alkylen z.B. für Methylen, Ethylen, Propylen oder Butylen steht, und ein 3-lsocyanatopropylrest.

Besonders bevorzugt erfolgt eine Oberflächenmodifizierung der Nanopartikel mit einem oder mehreren Silanen der Formel:

RₙSiX₍₄₋ₙ₎ (I)

worin die Reste X gleich oder verschieden sind und hydrolysierbare Gruppen oder Hydroxygruppen bedeuten, die Reste R gleich oder verschieden sind und nicht hydrolysierbare Gruppen darstellen und aus Alkyl, Alkenyl, Alkinyl, Aryl, Aralkyl und Alkylaryl ausgewählt sind und n 0, 1, 2 oder 3 ist, wobei bevorzugt für mindestens ein Silan n = 1, 2 oder 3 ist, oder einem davon abgeleiteten Oligomer.

Der nicht hydrolysierbare Rest R ist Alkyl (vorzugsweise C₁₋₈-Alkyl, wie Methyl, Ethyl, n-Propyl, Isopropyl, n-Butyl, sek.-Butyl und tert.-Butyl, Pentyl, Hexyl, Octyl oder Cyclohexyl), Alkenyl (vorzugsweise C₂₋₆-Alkenyl, wie z.B. Vinyl, 1-Propenyl, 2-Propenyl und Butenyl), Alkinyl (vorzugsweise C₂₋₆-Alkinyl, wie z.B. Acetylenyl und Propargyl), Aryl (vorzugsweise C₆₋₁₀-Aryl, wie z.B. Phenyl und Naphthyl) sowie Alkylaryle und Aralkyle (die vorzugsweise von den vorstehend genannten Alkyl- und Arylgruppen abgeleitet sind, wie z.B. Benzyl, Phenylethyl, Tolyl und Ethylphenyl). Die Reste R und X können gegebenenfalls einen oder mehrere übliche Substituenten, wie z.B. Halogen oder Alkoxy, aufweisen. Bevorzugte Reste R sind Alkyl, Alkenyl und Alkinyl mit 1 bis 4 Kohlenstoffatomen und Aryl, Aralkyl und Alkylaryl mit 6 bis 10 Kohlenstoffatomen.

Bevorzugte Beispiele sind Alkyltrialkoxysilane, wie Methyltri(m)ethoxysilan, Dialkyldialkoxysilane, Aryltrialkoxysilane, wie Phenyltri(m)ethoxysilan, und Diaryldialkoxysilane, wie Diphenyldi(m)ethoxysilan, wobei insbesondere Alkyl C₁₋₄-Alkyl und Alkoxy Methoxy oder Ethoxy ist. Bevorzugte Verbindungen sind Methyltriethoxysilan (MTEOS), Ethyltriethoxysilan, Phenyltriethoxysilan (PTEOS), Dimethyldimethoxysilan und Dimethyldiethoxysilan.

In einer besonders bevorzugten Ausführungsform erfolgt die Oberflächenmodifizierung mit mindestens einem Silan der Formel RₙSiX₄₋ₙ (I), worin n = 1 oder 2 ist, und mindestens einem Silan der Formel SiX₄ (II), worin X wie in Formel (I) definiert ist.

Beispiele für Silane der Formel (II) sind Si(OCH₃)₄, Si(OC₂H₅)₄, Si(O-n- oder -i-C₃H₇)₄, Si(OC₄H₉)₄, SiCl₄, HSiCl₃, Si(OOCCH₃)₄. Von diesen Silanen sind Tetraalkoxysilane bevorzugt, wobei solche mit C₁-C₄-Alkoxy besonders bevorzugt sind. Insbesondere Tetramethoxysilan und Tetraethoxysilan (TEOS) sind bevorzugt, wobei TEOS am meisten bevorzugt ist.

Die Oberflächenmodifizierung wird vorzugsweise mit einem Tetraalkoxysilan und mindestens einem Silan ausgewählt aus Alkyltrialkoxysilanen, Dialkyldialkoxysilanen, Aryltrialkoxysilanen und Diaryldialkoxysilanen durchgeführt, wobei Mischungen von Methyltriethoxysilan (MTEOS) und TEOS besonders bevorzugt sind. Wenn ein Teil des MTEOS durch Dimethyldiethoxysilan ersetzt wird, ergeben sich nach der Härtung flexiblere Produkte, was vorteilhaft sein kann. Es kann z.B. auch nur MTEOS verwendet werden.

In den bevorzugten Ausführungsformen werden SiO₂-Nanopartikel eingesetzt, so dass das am meisten bevorzugte System aus einer Mischung von MTEOS und TEOS als Ausgangsmaterialien zur Oberflächenmodifizierung und gegebenenfalls Kondensatbildung und SiO₂ als nanoskalige Feststoffteilchen besteht. Bei Nanopartikeln, die von SiO₂ verschieden sind, kann auch häufig der Einsatz rein organischer Verbindungen zu Oberflächenmodifizierung bevorzugter sein.

Die Zusammensetzung kann statt oder zusätzlich zu den Nanopartikeln Polykondensate oder Vorstufen davon als Bindemittelsol enthalten. Polykondensate können durch Hydrolyse und Kondensationsreaktionen hydrolysierbarer Verbindungen erhalten werden. Mit fortschreitender Kondensation wächst der Kondensationsgrad, wobei schließlich die poröse Matrix das Endprodukt ist. Als Vorstufen der Polykondensate werden hierbei die hydrolysierbaren Verbindungen, die Hydrolyseprodukte und die Kondensationsprodukte niederen Kondensationsgrads verstanden. Die diese Polykondensate oder Vorstufen enthaltenden Sole werden bevorzugt nach dem Sol-Gel-Verfahren erhalten, das nachstehend beschrieben wird.

In einer bevorzugten Ausführungsform sind Polykondensate oder Vorstufen davon enthalten, in die oberflächenmodifizierte oder unmodifizierte Nanopartikeln eingebettet sind. Die Zusammensetzung umfasst in einer bevorzugten Ausführungsform ein Nanokomposit, das erhältlich ist durch Hydrolyse und Kondensation von hydrolysierbaren Verbindungen in Anwesenheit der Nanopartikel, vorzugsweise nach dem Sol-Gel-Verfahren, wobei je nach eingesetzter Menge an hydrolysierbaren Verbindungen neben der Oberflächenmodifizierung auch Polykondensate oder eine Vorstufe davon gebildet werden.

Beim Sol-Gel-Verfahren werden gewöhnlich hydrolysierbare Verbindungen mit Wasser, gegebenenfalls unter saurer oder basischer Katalyse, hydrolysiert und gegebenenfalls zumindest teilweise kondensiert. Die Hydrolyse- und/oder Kondensationsreaktionen führen zur Bildung von Polykondensaten oder Vorstufen davon z.B. mit Hydroxy-, Oxogruppen und/oder Oxobrücken. Es können stöchiometrische Wassermengen, aber auch geringere oder größere Mengen verwendet werden. Das sich bildende Sol kann durch geeignete Parameter, z.B. Kondensationsgrad, Lösungsmittel oder pH-Wert, auf die für die Zusammensetzung gewünschte Viskosität eingestellt werden. Weitere Einzelheiten des Sol-Gel-Verfahrens sind z.B. bei C.J. Brinker, G.W. Scherer: "Sol-Gel Science - The Physics and Chemistry of Sol-Gel-Processing", Academic Press, Boston, San Diego, New York, Sydney (1990) beschrieben. Die Umsetzung kann in Anwesenheit eines organischen Lösungsmittels, vorzugsweise eines Alkohols, erfolgen. Der Alkohol kann sich auch während der Reaktion bilden, wenn Alkoxide als Ausgangsmaterialien verwendet werden.

Beim Sol-Gel-Verfahren können Nanopartikel enthaltende Sole od er Polykondensate enthaltende Sole erhalten werden. So kann z.B. eine sauer katalysierte Hydrolyse von hydrolysierbaren Siliciumverbindungen zu Solen führen, die Polykondensate, aber keine Nanopartikel enthalten ("polymerized sol"), während eine basische Katalyse zu Nanopartikel enthaltenden Solen führen kann ("colloid sol").

Zur Herstellung der Polykondensate oder der Vorstufen davon werden hydrolysierbare Verbindungen von glas- oder keramikbildenden Elementen oder Metallen M eingesetzt, insbesondere Elemente aus den Hauptgruppen III bis V und/oder den Nebengruppen II bis V des Periodensystems der Elemente und Mg. Vorzugsweise handelt es sich um die Elemente Si, Al, B, Sn, Ti, Zr, Mg, V oder Zn, insbesondere solche von Si, Al, Ti, Zr und Mg oder Mischungen von zwei oder mehr dieser Elemente. Selbstverständlich können auch andere glas- oder keramikbildende Elemente M eingebaut werden, insbesondere solche von Elementen der Hauptgruppen I und II des Periodensystems (z.B. Na, K und Ca) und der Nebengruppen VI bis VIII des Periodensystems (z.B. Mn, Cr, Fe und Ni). Es können auch Lanthaniden verwendet werden.

Die hydrolysierbare Verbindungen, die verwendet werden können, weisen insbesondere die allgemeine Formel MX_{b} auf, worin M das vorstehend definierte glas- oder keramikbildende Element M, X eine hydrolysierbare Gruppe oder Hydroxy ist, wobei zwei Gruppen X durch eine Oxogruppe ersetzt sein können, und b der Wertigkeit des Elements entspricht und meist 3 oder 4 ist. Beispiele für die hydrolysierbaren Gruppen X, die gleich oder voneinander verschieden sein können, sind Wasserstoff, Halogen (F, Cl, Br oder I, insbesondere Cl oder Br), Alkoxy (z.B. C₁₋₆-Alkoxy, wie z.B. Methoxy, Ethoxy, n-Propoxy, i-Propoxy und n-, i-, sek.- oder tert.-Butoxy), Aryloxy (vorzugsweise C₆₋₁₀-Aryloxy, wie z.B. Phenoxy), Alkaryloxy, z.B. Benzoyloxy, Acyloxy (z.B. C₁₋₆-Acyloxy, vorzugsweise C₁₋₄-Acyloxy, wie z.B. Acetoxy oder Propionyloxy), Amino und Alkylcarbonyl (z.B. C₂₋₇-Alkylcarbonyl wie Acetyl). Zwei oder drei Gruppen X können auch miteinander verbunden sein, z.B. bei Si-Polyolkomplexen mit Glycol, Glycerin oder Brenzcatechin. Die genannten Gruppen können gegebenenfalls Substituenten, wie Halogen oder Alkoxy, enthalten. Bevorzugte hydrolysierbare Reste X sind Halogen, Alkoxygruppen und Acyloxygruppen.

Bevorzugte hydrolysierbare Verbindungen sind Verbindungen von Silicium. Konkrete Beispiele sind die vorstehend genannten Silane der Formel (II). Die hydrolysierbaren Verbindungen können auch nicht-hydrolysierbare Substituenten tragen. In diesem Fall können organisch modifizierte anorganische Polykondensate oder Vorstufen davon gebildet werden. Beispiele für solche hydrolysierbaren Verbindungen mit nicht hydrolysierbaren Substituenten sind die Silane der Formel (1) mit n größer 0. Für die Polykondensate können auch Mischungen von hydrolysierbaren Verbindungen mit und ohne nicht-hydrolysierbare Substituenten verwendet werden. Insbesondere wenn refraktäre Materialien hergestellt werden sollen, kann es bevorzugt sein, zumindest zum Teil hydrolysierbare Verbindungen von z.B. Al, Zr und/oder Ti als refraktäre Komponente zu verwenden.

Beispiele für Titanverbindungen der Formel TiX₄ sind TiCl₄, Ti(OCH₃)₄, Ti(OC₂H₅)₄, Ti(2-ethylhexoxy)₄, Ti(n-OC₃H₇)₄ oder Ti(i-OC₃H₇)₄. Weitere Beispiele für einsetzbare hydrolysierbare Verbindungen von Elementen M sind Al(OCH₃)₃, Al(OC₂H₅)₃, Al(O-n-C₃H₇)₃, Al(O-i-C₃H₇)₃, Al(O-n-C₄H₉)₃, Al(O-sek.-C₄H₉)₃, AlCl₃, AlCl(OH)₂, Al(OC₂H₄OC₄H₉)₃, ZrCl₄, Zr(OC₂H₅)₄, Zr(O-n-C₃H₇)₄, Zr(O-i-C₃H₇)₄, Zr(OC₄H₉)₄, ZrOCl₂, Zr(2-ethylhexoxy)₄, sowie Zr-Verbindungen, die komplexierende Reste aufweisen, wie z.B. β-Diketon- und (Meth)acrylreste, Natriummethylat, Kaliumacetat, Borsäure, BCl₃, B(OCH₃)₃, B(OC₂H₅)₃, SnCl₄, Sn(OCH₃)₄, Sn(OC₂H₅)₄, VOCl₃ und VO(OCH₃)₃.

Bei bevorzugten Ausführungsformen, bei denen hydrolysierbare Silane der Formel (I) mit nicht hydrolysierbaren Gruppen und hydrolysierbare Ausgangsverbindungen ohne nicht hydrolysierbaren Gruppen eingesetzt werden, besitzen bevorzugt mindestens 10 Mol-% aller eingesetzten hydrolysierbaren Verbindungen auch nicht hydrolysierbare Gruppen. Bevorzugt enthalten mindestens 50 Mol-% und bevorzugter mindestens 60 Mol-% der eingesetzten hydrolysierbaren Verbindungen mindestens eine nicht hydrolysierbare Gruppe. Das Stoffmengenverhältnis von hydrolysierbaren Verbindungen ohne nicht hydrolysierbare Gruppen zu hydrolysierbaren Verbindungen mit mindestens einer nicht hydrolysierbaren Gruppe beträgt z.B. bevorzugt 5 bis 50 Mol-% zu 50 bis 95 Mol-% (5-50:50-95) und bevorzugt 1:1 bis 1:6 und bevorzugter 1:3 bis 1:5, z.B. 1:4. Es können auch bereits teilweise umgesetzte Oligomere als Ausgangsmaterial eingesetzt werden, die Mengenangaben beziehen sich aber immer auf monomere Ausgangsverbindungen.

Wenn hydrolysierbare Verbindungen zur Herstellung von Polykondensaten und Nanopartikel eingesetzt werden, wird das Verhältnis zwischen den hydrolysierbaren Verbindungen und den Nanopartikeln bevorzugt so eingestellt, dass das Atomverhältnis der glas- oder keramikbildenden Elemente (Element M als Zentralelement der hydrolysierbaren Verbindungen, wie vorstehend definiert) der hydrolysierbaren. Verbindungen zu den Metallatomen (einschließlich Si, B, Ge, wie vorstehend definiert) in den Nanopartikeln im Bereich von 5:1 bis 1:2, insbesondere 3:1 bis 1:1, liegt.

Eine überwiegend aus SiO₂ bestehende Matrix ist bis unter 1.200°C (Erweichungspunkt SiO₂) beständig. In einer bevorzugten Ausführungsform kann die Zusammensetzung auch refraktäre Komponenten enthalten. Auf diese Weise ist die Bildung besonders hochtemperaturbeständiger Isolationsmaterialien möglich. Durch den Zusatz einer refraktären Komponente können Matrices erhalten werden, die einen Erweichungspunkt von über 1.200°C, bevorzugt über 1.300°C und besonders bevorzugt über 1.400°C aufweisen.

Unter refraktären Komponenten werden hier Komponenten verstanden, die die Wärmebeständigkeit verbessern können, z.B. im Hinblick auf eine Matrix auf reiner SiO₂-Basis. Bevorzugt wird durch den Zusatz der refraktären Komponente ein Erweichungspunkt von über 1.200°C für das Material erhalten.

Bei Zusatz einer Al-Komponente als refraktärer Komponente kann z.B. mit Si-Komponenten Mullit entstehen, ein Oxid aus Aluminium und Silicium, dessen Temperaturbeständigkeit bis weit über 1.600°C reicht. Mit einer Zr-Komponente kann ein Zirconiumsilicat gebildet werden, bei dem es sich ebenfalls um eine refraktäre Zusammensetzung handelt. Auch Rutil ist als feuerfester Stoff verwendbar. Beispiele für Elemente, die über die refraktäre Komponente eingebaut werden, sind Al, Zr, Ti, Mg und Ca. Je nach speziellem Fall kann gegebenenfalls bereits eine relative geringe Menge einer refraktären Komponente in einer SiO₂-Matrix eine Erhöhung der Temperaturbeständigkeit bewirken. Dem Fachmann sind die geeigneten refraktären Komponenten und die notwendigen Mengenverhältnisse vertraut.

Die zusätzliche refraktäre Komponente, die kein Si enthält, kann durch Zugabe entsprechender Nanopartikeln und/oder hydrolysierbarer Verbindungen oder daraus erhaltener Polykondensate oder Vorstufen in die Zusammensetzung in die Matrix eingebaut werden. Es können die Nanopartikel und die hydrolysierbaren Verbindungen bzw. Polykondensate oder deren Vorstufen verwendet werden, die vorstehend beispielhaft für die Herstellung des Bindemittels bzw. des Nanokomposits genannt wurden, sofern eine Verbesserung der Temperaturbeständigkeit erreicht wird.

Bevorzugte Beispiele für refraktäre Komponenten in Form von Nanopartikeln sind Titanoxid, Zirconiumoxid oder Aluminiumoxid, die gegebenenfalls hydratisiert sind. Bevorzugt werden sie in Form eines Sols eingesetzt. Diese Nanopartikel können neben oder anstelle von SiO₂-Teilchen verwendet werden, wobei es gewöhnlich bevorzugt ist, dass zumindest ein Teil der insgesamt eingesetzten Nanopartikel aus SiO₂ sind. Beispiele für einsetzbare hydrolysierbare Verbindungen als refraktäre Komponente sind vorstehend genannte hydrolysierbare Verbindungen von Al, Zr und Ti oder Polykondensate davon oder Mischpolykondensate davon mit anderen hydrolysierbaren Verbindungen, z.B. Si-Verbindungen, oder deren Vorstufen.

Durch die erfindungsgemäß eingesetzte Zusammensetzung, insbesondere bei Vorliegen der zusätzlichen refraktären Komponente, ist es auch überraschenderweise möglich, Hohlkörper zur Bildung der Poren einzusetzen, die an sich für den vorgesehenen Temperaturbereich, in dem das Isolationsmaterial eingesetzt werden soll, keine ausreichende Wärmebeständigkeit aufweisen. Dieser erstaunliche Effekt wird nachstehend am Beispiel von Glashohlkugeln erläutert.

Gewöhnliche Glaszusammensetzungen sind in der Regel bis 500 oder 600°C beständig, in Ausnahmefällen bis zu 700°C. Im Fall der Verwendung von Glashohlkugeln zur Bildung der Poren (siehe nachstehende Erläuterungen) kann bei Verwendung einer Zusammensetzung, die Glashohlkugeln umfasst, der daraus gebildete Formkörper auch nach dem Erweichen des Glases bei hohen Temperaturen seine Form beibehalten, wenn dafür gesorgt wird, dass das Bindemittel, vorzugsweise das Nanokompositbindemittel, eine durchgehende Phase bildet, in der die Glaskugeln eingebettet sind. Selbst ein Aufschmelzen der Kugeln wird die Form nicht beeinträchtigen, so dass man durch dieses System in einem erfindungsgemäßen Formkörper eine höhere Temperaturformbeständigkeit erhält als es z.B. durch zusammengesinterte Glaskugeln oder Glasschäume möglich ist.

Bei einer ungleichmäßigen Verteilung oder bei einem perkolierenden Glaskugelsystem ist die Temperaturbeständigkeit des Formkörpers auf die Temperaturbeständigkeit des Glases beschränkt. Durch das erfindungsgemäße Isolationsmaterial mit einer im gehärteten Zustand festen Matrix aus dem Bindemittel gelingt es jedoch, eine Struktur im Formkörper zu erhalten, die eine Beständigkeit deutlich oberhalb der Glastemperatur der Hohlkugeln zeigt. Somit ergibt sich ein isolierender Formkörper mit einer deutlich höheren Temperaturbeständigkeit als die Temperaturbeständigkeit der Komponente, welche die Isolierwirkung bewirkt (z.B. Glas). Nach dem erfindungsgemäßen Verfahren können die Poren darüber hinaus auch ohne Einsatz von Glashohlkugeln gebildet werden, so dass durch Glas eventuell sich ergebende Nachteile vermieden werden können und ein variabler Weg zur Herstellung der Materialien verfügbar ist.

Als einsetzbare Lösungsmittel für die Zusammensetzung kommen sowohl Wasser als auch organische Lösungsmittel oder Mischungen in Betracht. Dabei handelt es sich um die üblichen, auf dem Gebiet der Beschichtung oder der Formkörper eingesetzten Lösungsmittel. Beispiele für geeignete organische Lösungsmittel sind Alkohole, vorzugsweise niedere aliphatische Alkohole (C₁-C₈-Alkohole), wie Methanol, Ethanol, 1-Propanol, i-Propanol und 1-Butanol, Ketone, vorzugsweise niedere Dialkylketone, wie Aceton und Methylisobutylketon, Ether, vorzugsweise niedere Dialkylether, wie Diethylether, oder Diolmonoether, Amide, wie Dimethylformamid, Tetrahydrofuran, Dioxan, Sulfoxide, Sulfone oder Butylglycol und deren Gemische. Bevorzugt werden Alkohole verwendet. Es können auch hochsiedende Lösungsmittel verwendet werden. Beim Sol-Gel-Verfahren kann das Lösungsmittel gegebenenfalls ein bei der Hydrolyse gebildeter Alkohol aus den Alkoholatverbindungen sein.

In einer bevorzugten Ausführungsform hat die Matrix-bildende Zusammensetzung, d.h. die Zusammensetzung, die die Nanopartikel und/oder Polykondensate oder Vorstufen davon bzw. Nanokomposite (Bindemittel), aber noch keine Komponenten, die für die Porenbildung eingesetzt werden, enthält, einen Feststoffgehalt von 30 bis 60 Gew.-%. Durch Variation des Feststoffgehalts kann unter Berücksichtigung der Art und der Menge des einzusetzenden, die zusätzlichen Poren bildenden Materials die Verarbeitungskonsistenz eingestellt werden.

Zur Bildung der zusätzlichen Poren enthält die Zusammensetzung einen oder mehrere feste Porenbildner, wodurch zusätzliche Poren gebildet werden, die mit den Matrixporen eine heteroporöse Struktur aus Poren unterschiedlicher mittlerer Größe bilden können. Die Ausbildung der zusätzlichen: Poren im Isolationsmaterial kann durch Zugabe von Hohlkörpern zur Zusammensetzung, die das Bindemittel umfasst, erfolgen. Diese hohlen, festen Teilchen können eine beliebige Form aufweisen, in der Regel handelt es sich um etwa kugelförmige Hohlkörper. Die Hülle der Hohlkörper kann aus beliebigen Materialien ausgewählt werden. Beispiele sind Glas, Keramik oder Kunststoff, wie Glashohlkugeln, Korundhohlkugeln oder Kunststoffhohlkugeln, wobei Glashohlkugeln und insbesondere Mikroglashohlkugeln bevorzugt sind. Solche Hohlkörper sind im Handel erhältlich.

Die Poren werden in diesem Fall durch den Hohlraum der Körper gebildet, so dass der mittlere Innendurchmesser der Hohlkörper in der Regel dem mittleren Porendurchmesser der gebildeten Poren entspricht, sofern sich keine Varianz z.B. durch eine teilweise Zerstörung einiger Hohlkörper einer bestimmten Größenfraktion ergibt. Natürlich hängt die Zahl der erhaltenen Poren vom prozentualen Anteil der eingesetzten Hohlkörper im Verhältnis zur Menge an Bindemittel ab. Unter Berücksichtigung des vorstehenden können Typ und Größe der Hohlkörper und die zugegebene Menge ohne weiteres vom Fachmann in Abhängigkeit von dem gewünschten Porenanteil in der Matrix und dem gewünschten mittleren Porendurchmesser bestimmt werden. Natürlich können auch Hohlkörper verschiedener Größe eingesetzt werden, um Poren unterschiedlicher Größe zu erhalten.

Metallhohlkugeln können zwar prinzipiell auch verwendet werden, sie bedingen aber eine höhere Wärmeleitfähigkeit, ein höheres Gewicht und können wegen unterschiedlicher Wärmeausdehnung Spannungen im Isolationsmaterial erzeugen. Bei vollständiger Auflösung der Metallmatrix solcher Hohlkugeln und Einbau des Metalls in die Bindemittelmatrix, z.B. durch Oxidation von Aluminium bei Einsatz von Al-Hohlkugeln, könnte der Einsatz von Metallhohlkugeln sinnvoll sein, wobei durch das sich bildende Aluminiumoxid sogar eine refraktäre Komponente geliefert wird.

Bei der Verwendung von Glashohlkugeln ist z.B. ein vorteilhaftes Verhältnis zwischen Matrix und Glashohlkugel derart, dass die Matrix 1 bis 20 Gew.-% der fertigen Schicht oder des fertigen Formkörpers ausmacht.

Alternativ können die zusätzlichen Poren durch Zugabe von wärmezersetzbaren oder verdampfbaren Teilchen in die Zusammensetzung und anschließende Wärmebehandlung zur Zersetzung und/oder Verdampfung der Teilchen erhalten werden. Unter wärmezersetzbaren Teilchen werden hier Teilchen verstanden, die sich bei der in der Wärmebehandlung eingesetzten Temperatur zersetzen und zumindest zum größeren Teil und bevorzugt vollständig in flüchtige, sublimierbare bzw. verdampfbare Komponenten überführt werden.

Dabei kann der Einsatz von wärmezersetzlichen oder verdampfbaren Teilchen, die zudem hohl sind, besonders bevorzugt sein, da verglichen mit einem massiven. Teilchen dadurch weniger Material zersetzt werden muss, um Poren mit etwa gleichem Durchmesser zu erhalten. Hierfür eignen sich z.B. Hohlkörper aus einem wärmezersetzbaren Kunststoff, wie z. B. Polystyrolhohlkugeln.

Die erhaltene mittlere Porendurchmesser kann in etwa dem mittleren Teilchendurchmesser der eingesetzten wärmezersetzbaren Teilchen entsprechen. Die gebildeten Poren können durch freigesetzte Gase auch größer als die Teilchengröße der wärmezersetzbaren Teilchen sein. Wie bei den Hohlkörpern kann der Fachmann Typ und Größe der zersetzbaren Teilchen und die zugegebene Menge ohne weiteres in Abhängigkeit von dem gewünschten Porenanteil in der Matrix und dem gewünschten mittleren Porendurchmesser bestimmen. Natürlich können auch zersetzbare Teilchen verschiedener Größe eingesetzt werden, um Poren unterschiedlicher Größe zu erhalten.

Die Wärmezersetzbarkeit der Teilchen kann sich z.B. aus der Thermolabilität der Verbindungen und/oder aus der Oxidierbarkeit ergeben. Jedenfalls werden die Teilchen bei Wärmeeinwirkung in flüchtige oder verdampfbare Komponenten zersetzt, die aus der sich bildenden Matrix unter Ausbildung der Poren entweichen können. Bevorzugt handelt es sich um rückstandsfrei zersetzbare Materialien. Gegebenenfalls können aber auch Rückstände zurückbleiben, sofern sich die gewünschten Poren bilden.

Beispiele für geeignete wärmezersetzbare bzw. verdampfbare Materialien sind Metallnitrate, NH₄Cl, Carbonate, organische Salze, wie Carbonsäuresalze, Ruß oder Kunststoffe, z.B. in Form von Polymerkügelchen, die bei den eingesetzten Temperaturen oxidativ zerstört werden und z.B. als Pulver geeigneter Größe eingesetzt werden. Weitere konkrete Beispiele für wärmezersetzbare oder verdampfbare Materialien sind Vinylacetat-Ethylen-Copolymerpulver, Polyvinylalkoholpulver, Phenoplastpulver, Harnstoff-Formaldehyd-Harzpulver, Polyesterharzpulver, Mehl, Proteine, Polysaccharide, Wachse, Siliconharzpulver und Holzmehl.

Es können auch übliche, dem Fachmann bekannte Blähmittel eingesetzt werden, wie Blähgraphit oder Substanzen, wie Melamine, welche Stickstoff freisetzen. Die Blähmittel können zu einer Volumenexpansion des Bindemittels führen. Es können Blähmittel eingesetzt werden, die sich durch chemische Reaktion oder Katalyse zersetzen, so dass in diesem Fall für die Bildung der zusätzlichen Poren keine Wärmebehandlung erforderlich ist.

Es ist bevorzugt, dass die eingesetzten Teilchen in der Zusammensetzung, in die sie gegeben werden, nicht löslich sind oder die Lösungsgeschwindigkeit ausreichend gering ist. Auch eine geeignete Dispergierbarkeit sollte vorhanden sein. Der Fachmann kann die Teilchen entsprechend auswählen. Die mittlere Teilchengröße wird wie oben erläutert anhand der gewünschten Porengröße ausgewählt, wobei feindisperse Materialien zweckmäßig sind, um feine Poren zu hinterlassen. Für eine gute Isolationswirkung sind in der Regel Teilchen mit einem mittleren Teilchendurchmesser (Volumenmittel, Laserbeugungsverfahren (Auswertung nach Mie)) von 1 bis 1.000, bevorzugt 1 bis 500 µm geeignet, es können aber auch kleinere Teilchen eingesetzt werden.

Da die erfindungsgemäß eingesetzten Matrixzusammensetzungen bis zu relativ hohen Temperaturen porös bleiben, können bei den Systemen selbst bei hohen Temperaturen, die gegebenenfalls für die Zersetzung erforderlich sind, Sauerstoff (z.B. aus der Luft oder durch gezielte Einspeisung) in die Matrix eingeführt werden, um oxidative Zersetzungsprozesse einzuleiten, und flüchtige Zersetzungs- bzw. Verbrennungsprodukte aus dem System entweichen.

Neben den genannten Komponenten können gegebenenfalls nach Bedarf weitere, dem Fachmann auf dem Gebiet bekannte Additive zugegeben werden. Z.B. kann ein Fasermaterial, z.B. Glasfasern, zugegeben werden, um die Festigkeit zu erhöhen. Die Komponenten der Zusammensetzung können in beliebiger Reihenfolge zugegeben werden.

Der Zusammensetzung können als Additiv z.B. auch organische Monomere, Oligomere oder Polymere zugesetzt werden, um die Rheologie einzustellen oder eine Kontrolle der Bindungsfestigkeit des Formkörpers zu erreichen. Diese Additive können auch eine Bindemittelfunktion haben. Geeignete Verbindungen sind dem Fachmann auf dem Gebiet bekannt. Beispiele für verwendbare Materialien sind organische Monomere, Oligomere oder Polymere, die polare Gruppen, wie Hydroxyl-, primäre, sekundäre oder tertiäre Amino-, Carboxyl- oder Carboxylatgruppen, aufweisen. Typische Beispiele sind Polyvinylalkohol, Polyvinylpyrrolidon, Polyacrylamid, Polyvinylpyridin, Polyallylamin, Polyacrylsäure, Polyvinylacetat, Polymethylmethacrylsäure, Stärke, Gummi arabicum, andere polymere oder oligomere Alkohole wie z.B. Polyethylen-Polyvinylalkohol-Copolymere, Polyethylenglycol, Polypropylenglycol und Poly(4-vinylphenol) bzw. davon abgeleitete Monomere oder Oligomere. Als Polyvinylalkohol kann z.B. das im Handel erhältliche Mowiol^{®} 18-88 verwendet werden.

Das Isolationsmaterial kann als Beschichtung oder als Formkörper verwendet werden, so dass die vorstehend beschriebene Zusammensetzung als Beschichtungszusammensetzung oder als Formmasse dienen kann. Natürlich kann die Zusammensetzung auf dem Fachmann bekannte Weise dem gewünschten Verwendungszweck angepasst werden, z.B. bezüglich der Viskosität.

Für die Beschichtung wird die Zusammensetzung als Beschichtungszusammensetzung nach den üblichen Beschichtungsverfahren auf ein Substrat aufgetragen, z.B. Tauchen, Rollen, Rakeln, Fluten, Ziehen, Spritzen, Schleudern oder Aufstreichen. Das Substrat kann jede zweckmäßige Form aufweisen. Bei dem Substrat kann es sich um jedes für den Zweck geeignete Material handeln. Beispiele für geeignete Materialien sind Metalle oder Metalllegierungen, Glas, Keramik, einschließlich Oxidkeramik, Glaskeramik, Baustoffe, wie Steine, oder Kunststoff. Das Substrat kann mit einer Oberflächenschicht versehen sein, z.B. einer Metallisierung, einer Emaillierung, einer Keramikschicht oder einer Lackierung.

Bevorzugt wird das Isolationsmaterial als Formkörper verwendet, wobei alle dem Fachmann bekannte Techniken zur Formgebung eingesetzt werden können, z.B. ein Formwerkzeug. Es können auf einfache Weise auch komplexe Geometrien gestaltet werden.

Die Zusammensetzung wird nach Beschichtung oder Formgebung gehärtet. Dies kann bei Raumtemperatur (ca. 20°C) erfolgen, gewöhnlich erfolgt aber eine Wärmebehandlung. Die Wärmebehandlung kann neben dem Härten der Zusammensetzung auch zum teilweisen Verdichten, Tempern und/oder Ausbrennen organischer Bestandteile dienen. Bei Einsatz wärmezersetzbarer oder verdampfbarer Teilchen dient die Wärmebehandlung auch der zusätzlichen Porenbildung. Das erfindungsgemäß eingesetzte Bindemittel bildet nach der Härtung eine poröse Matrix aus.

Die Beschichtung oder der Formkörper werden bevorzugt zur Härtung einer Wärmebehandlung unterzogen, wobei, falls vorhanden, wärmezersetzbare oder verdampfbare Teilchen sich unter Bildung von Poren zersetzen und verdampfen. Die Wärmebehandlung zur Härtung erfolgt bevorzugt bei mindestens 40°C, bevorzugt bei mindestens 100°C, besonders bevorzugt bei mindestens 150°C. Insbesondere wenn die sich bildende Matrix noch organische Komponenten enthält und/oder zur Bildung der zusätzlichen Poren wärmezersetzliche oder verdampfbare Teilchen eingesetzt werden, ist eine Wärmebehandlung bei mindestens 300°C, bevorzugt mindestens 350°C oder mindestens 400°C bevorzugt, wobei die organischen Bestandteile ausgebrannt werden und/oder die zusätzlichen Poren ausgebildet werden. Dabei verbessert sich auch die Wärmebeständigkeit des Materials. Die angegebenen Mindesttemperaturen beziehen sich auf die in einem Behandlungsschritt eingesetzte Maximaltemperatur. Die zweckmäßige Maximaltemperatur hängt naturgemäß vom verwendeten Einsatzmaterial ab und kann vom Fachmann ohne weiteres gefunden werden.

Die Wärmebehandlung kann in einem Schritt erfolgen, bevorzugt werden aber mindestens zwei oder drei Wärmebehandlungsschritte durchgeführt, wobei in der Regel in jeder folgenden Stufe mit höheren Temperaturen gearbeitet wird. So wird z.B. in einem optionalen Antrocknungsschritt bei relativ niedrigen Temperaturen von z.B. Raumtemperatur bis 60°C wärmebehandelt. Dieser Schritt ist nicht zwingend, aber insbesondere bei Formkörpern vorteilhaft und manchmal geboten, um die notwendige Anfangsfestigkeit zu erhalten.

Der Härtungsschritt, der sich anschließen kann oder direkt ohne vorherige Antrocknung durchgeführt wird, kann bei Raumtemperatur erfolgen oder wird durch Wärmebehandlung bei mindestens 40°C, bevorzugt mindestens 100°C und insbesondere mindestens 150°C, bevorzugt mindestens 300°C und besonders bevorzugt mindestens 350°C erreicht. Bevorzugt erfolgt die Härtung zweistufig durch eine Zwischenhärtung und eine Endhärtung.

Für die Zwischenhärtung kann z.B. eine Wärmebehandlung z.B. in einem Temperaturbereich von mindestens 40°C, z.B. von 100 bis 250°C, erfolgen. Eine Endhärtung erfolgt dann z.B. bei mindestens 300°C, bevorzugt mindestens 350°C oder mindestens 400°C, wobei bei diesem Schritt gegebenenfalls vorhandene organische Komponenten ausgebrannt werden und/oder wärmezersetzbare oder verdampfbare Porenbildner unter endgültiger Ausbildung der zusätzlichen Poren ausgetrieben werden. Dadurch werden auch die Temperaturbeständigkeit bzw. Beständigkeit gegen Rissbildung erhöht.

Die jeweilige Dauer der Behandlungsschritte hängt vom Material und der eingesetzten Temperatur ab und kann vom Fachmann ohne weiteres ermittelt werden. Selbstverständlich können wie üblich die Wärmebehandlungsschritte über ein Temperaturprogramm gesteuert werden, über die die geeigneten Heiz- und Abkühlgeschwindigkeiten sowie die Haltezeiten gewählt werden.

Sofern wärmezersetzbare oder verdampfbare Teilchen zur Bildung der Poren eingesetzt werden, erfolgen die Zersetzung und Bildung der Poren bei der Wärmebehandlung. Das Material und die eingesetzte Temperatur sind so zu wählen, dass die Zersetzungstemperatur erreicht wird. Die Zersetzung unter Ausbildung der Poren findet in der Regel im Verlauf der Härtung statt. Bei Verwendung anderer Bläh- oder Treibmittel erfolgt die Porenbildung entsprechend in der dem Fachmann bekannten Weise.

Falls die Zusammensetzung organische Komponenten umfasst, z.B. in Form organischer Reste im Nanokomposit oder in Form eingesetzter organischer Oligomere oder Polymere, werden diese durch eine Wärmebehandlung ausgebrannt, so das eine anorganische Matrix zurückbleibt. Die geeignete Temperatur und Dauer zum Ausbrennen hängt von den eingesetzten Materialien ab und ist dem Fachmann bekannt. Durch das Vorhandensein von organischen Komponenten wird häufig die Gefahr der Rissbildung bei Härtung verringert.

Bei Einsatz von hydrolysierbaren Silanen mit funktionellen Gruppen, über die eine Vernetzung möglich ist (z.B. Alkenyl-, Alkinyl- oder Epoxidgruppen) kann sich bei höheren Temperaturen unter O₂-Ausschluss durch diese Gruppen eine zusätzliche organische Polymervernetzung ergeben, wodurch beim Ausbrennen eine Kohlenstoffarmierung aufgebaut werden kann, die die Porenstruktur verfestigt kann. Eine zwischenzeitliche organische Vernetzung kann bei Vorliegen geeigneter funktioneller Gruppen katalytisch gefördert werden.

Durch das Nanopartikel und/oder Polykondensate oder Vorstufen davon enthaltende Bindemittel in der Zusammensetzung kann eine poröse Matrix erhalten werden. Die Porengröße kann z.B. durch die eingesetzte Temperatur und Dauer bei den Wärmebehandlungsschritten reguliert werden. Dem Fachmann sind die Bedingungen zur Einstellung der Porosität der Matrix bekannt. Die erfindungsgemäß hergestellte Matrix bleibt überraschenderweise auch bei relativ hohen Temperaturen porös.

Es wird ein hochtemperaturfestes Isolationsmaterial erhalten. Die erhaltenen Formteile können nach Bedarf nachbearbeitet werden. So eignen sich die Formteile für die Material abhebende Bearbeitung (z.B. mechanisch oder durch Bestrahlung). Sie können auch mit einer Beschichtung versehen werden.

Das Isolationsmaterial eignet sich wegen seiner geringen Wärmeleitfähigkeit sehr gut zur Wärmedämmung und kann in einem ausgesprochen breiten Temperaturbereich verwendet werden, z.B. von -200°C bzw. von Raumtemperatur bis zu Temperaturen von sogar 2.000°C.

Mögliche konkrete Anwendungen sind die Wärme- und Kälteisolation, z.B. für Gefrierschränke, Öfen, Laborgeräte, und für industrielle Zwecke wie in der Metallurgie oder Glasindustrie, eine Kombination von Isolation und Brandschutz, die thermische Kapselung von temperatursensitiven Komponenten im Elektronikbereich und von Kabeln. Weitere Einsatzgebiete sind der Bausektor, der Transportsektor, z.B. für Automobile, LKW und Flugzeuge, und die Raumfahrt.

Es folgen Beispiele zur Erläuterung der Erfindung.

### Beispiel 1

Durch Hydrolyse und Kondensation von TEOS und MTEOS unter Anwesenheit eines wässrigen Kieselsols wird eine alkoholische Binderdispersion mit einem Feststoffgehalt zwischen etwa 30 und 60 Gew.-% erhalten. Gegebenenfalls wird Lösungsmittel zur Einstellung der Viskosität abgedampft. Nach Zugabe von Mikroglashohlkugeln wird mit Hilfe eines langsam laufenden Flügelrühres gemischt, so dass eine homogene Formstoffmischung erhalten wird. Der Anteil der Hohlkugel wird so gewählt, dass im gehärteten Formteil ein Bindergehalt von 5 bis 20 Gew.-% erhalten wird. Durch Variation des Bindergehalts kann die Verarbeitungskonsistenz eingestellt werden.

Die Formstoffmischung wird zwischen Kern und Hülse einer zweiteiligen Aluminiumform eingefüllt und eingestampft. Sofort nach Füllung der Form wird die Hülse abgezogen und der Kern wird mit der um den Kern angepressten Formstoffmischung 30 min bei 40°C in einen Trockenschrank gestellt, um die Formstoffmischung anzutrocknen. Dadurch kann dem Bauteil die für die weitere Verarbeitung notwendige Anfangsfestigkeit gegeben werden.

Vor der weiteren Aushärtung wird das Bauteil vom Kern entfernt, um ein Verkleben mit dem Kern zu vermeiden. Dann wird das Bauteil erneut in den Trockenschrank gestellt und die Temperatur wird mit etwa 5°C/min bis auf 200°C erhöht und etwa 12 h gehalten. Nach langsamer Abkühlung auf RT wird der fertige Formkörper entnommen. Eine Nachbehandlung erfolgt, um den Formkörper für Temperaturen bis 500°C rissbeständig zu machen. Hierfür wird der Formkörper in einem Umluftofen mit etwa 1 K/min bis auf 500°C erwärmt, etwa 2 h bei dieser Temperatur gehalten und mit derselben Rate wieder auf RT abgekühlt. Der Einsatz eines Umluftofens im letzten Schritt ist besonders bevorzugt. Das erhaltene Formteil weist eine Wärmeleitfähigkeit von 0,045 W/m·K auf.

### Beispiel 2 Hochtemperaturisolierwerkstoffe auf der Basis refraktäres Mullit/Zirconiumonsilicat bildender Nanokomposite

### A. Bindersynthesen

### a) MTZS 0,75

65,5 g MTEOS und 19,1 g TEOS werden gemischt. Eine Hälfte der Mischung wird unter starkem Rühren mit 49,7 g Zirconiumoxidsol mit 60 Gew.% Feststoffanteil (29,82 g IZCO in 19,88 g Wasser) und 0,4 ml konzentrierter Salzsäure zur Reaktion gebracht. Nach 5 min wird die zweite Hälfte der Silanmischung zum Ansatz gegeben und noch 5 min weitergerührt. Nach 24 h wird die Bindemitteldispersion durch Abdestillieren des Lösemittels Ethanol aufkonzentriert. Es resultiert ein Bindemittel mit einem Feststoffgehalt von 60 Gew.%.

### b) MTKZS 0,75

Eine Mischung aus 16,4 g MTEOS und 4,8 g TEOS wird mit 14,2 g Kieselsol Levasil^{®} 300/30, das zuvor mit konzentrierter Salzsäure auf einen pH von 7 eingestellt wurde, und 0,2 ml konzentrierter Salzsäure zur Reaktion gebracht. Parallel dazu wird eine Mischung aus 16,4 g MTEOS und 4,8 g TEOS mit 19,88 g einer 50%igen, wässrigen Zirconiumdispersion und 0,2 ml konzentrierter Salzsäure zur Reaktion gebracht. Nach 10 min werden die beiden Ansätze vereint. Nach 5 min wird der kombinierte Ansatz mit einer weiteren Silanmischung bestehend aus 32,8 g MTEOS und 9,6 g TEOS versetzt und noch 5 min weitergerührt. Nach 24 h wird die Bindemitteldispersion durch Abdestillieren des Lösemittels Ethanol aufkonzentriert. Es resultiert ein Bindemittel mit einem Feststoffgehalt von 60 Gew.%.

### c) MTKAIS 0,75

Eine Mischung aus 16,4 g MTEOS und 4,8 g TEOS wird mit 14,2 g Kieselsol Levasil^{®} 300/30, das zuvor mit konzentrierter Salzsäure auf einen pH von 7 eingestellt wurde, und 0,2 ml konzentrierter Salzsäure zur Reaktion gebracht. Parallel dazu wird eine Mischung aus 16,4 g MTEOS und 4,8 g TEOS mit 12,2 g einer 15%igen Dispersaldispersion (1,83 g Al₂O₃ in 10,37 g Wasser) und 0,2 ml konzentrierter Salzsäure zur Reaktion gebracht. Nach 10 min werden die beiden Ansätze vereint. Nach 5 min wird der kombinierte Ansatz mit einer weiteren Silanmischung bestehend aus 32,8 g MTEOS und 9,6 g TEOS versetzt und noch 5 min weitergerührt. Nach 24 h wird die Bindemitteldispersion durch Abdestillieren des Lösemittels Ethanol aufkonzentriert. Es resultiert ein Bindemittel mit einem Feststoffgehalt von 60 Gew.%.

### d) MTZAIS 0,75

Eine Mischung aus 16,4 g MTEOS und 4,8 g TEOS wird mit 12,2 g einer 15%igen Dispersaldispersion (1,83 g Al₂O₃ in 10,37 g Wasser) und 0,2 ml konzentrierter Salzsäure zur Reaktion gebracht. Parallel dazu wird eine Mischung aus 16,4 g MTEOS und 4,8 g TEOS mit 19,88 g einer 50% igen Zirconiumoxiddispersion (9,94 g IZCO in 9,94 g Wasser) und 0,2 ml konzentrierter Salzsäure zur Reaktion gebracht. Nach 10 min werden die beiden Ansätze vereint. Nach 5 min wird der kombinierte Ansatz mit einer weiteren Silanmischung bestehend aus 32,8 g MTEOS und 9,6 g TEOS versetzt und noch 5 min weitergerührt. Nach 24 h wird die Bindemitteldispersion durch Abdestillieren des Lösemittels Ethanol aufkonzentriert. Es resultiert ein Bindemittel mit einem Feststoffgehalt von 60 Gew.%.

### e) Z₅-MTKZS 0,75

Eine Mischung aus 16,4 g MTEOS, 4,5 g TEOS und 0,4 g Zirconiumtetra-n-propylat wird mit 14,2 g Levasil^{®} 300/30, das zuvor mit konzentrierter Salzsäure auf einen pH von 7 eingestellt wurde, und 0,2 ml konzentrierter Salzsäure zur Reaktion gebracht. Parallel dazu wird eine Mischung aus 16,4 g MTEOS, 4,5 g TEOS und 0,4 g Zirconiumtetra-n-propylat mit 19,88 g einer 50%igen wässrigen nanoskaligen Zirconiumoxiddispersion und 0,2 ml konzentrierter Salzsäure zur Reaktion gebracht. Nach 10 min werden die beiden Ansätze vereint. Nach 5 min wird der kombinierte Ansatz mit einer weiteren Silanmischung bestehend aus 32,8 g MTEOS und 9,6 g TEOS versetzt und noch 5 min weitergerührt. Nach 24 h wird die Bindemitteldispersion durch Abdestillieren des Lösemittels Ethanol aufkonzentriert. Es resultiert ein Bindemittel mit einem Feststoffgehalt von 60 Gew.%.

### f) Z₅-MTKZS-PT 0,75

Eine Mischung aus 16,4 g MTEOS, 4,5 g TEOS und 0,4 g Zirconiumtetra-n-propylat wird mit 14,2 g Levasil^{®} 300/30, das zuvor mit konzentrierter Salzsäure auf einen pH von 7 eingestellt wurde, und 0,2 ml konzentrierter Salzsäure zur Reaktion gebracht. Parallel dazu wird eine Mischung aus 16,4 g MTEOS, 4,5 g TEOS und 0,4 g Zirconiumtetra-n-propylat mit 19,88 g einer 50%igen wässrigen nanoskaligen Zirkondioxiddispersion und 0,2 ml konzentrierter Salzsäure zur Reaktion gebracht. Nach 10 Minuten werden die beiden Ansätze vereint. Nach 5 min wird der kombinierte Ansatz mit einer weiteren Silanmischung bestehend aus 44,2 g Phenyltriethoxysilan und 9,6 g TEOS versetzt und noch 5 min weitergerührt. Nach 24 h wird die Bindemitteldispersion durch Abdestillieren des Lösemittels Ethanol aufkonzentriert. Es resultiert ein Bindemittel mit einem Feststoffgehalt von 60 Gew.%.

### B. Herstellung von hochtemperaturbeständigen Isolationswerkstoffen:

143 g Bindemittel mit einem Feststoffgehalt von 60 Gew.-% nach A) werden mit 50 g Polystyrol-Mikrohohlkugeln (15 bis 120 µm) vermischt und in eine Form gegossen. Durch langsame Pyrolyse der organischen Bestandteile bei 200 bis 300 °C entsteht ein feinporiger, hochtemperaturbeständiger, fester Isolationskörper. Als Hohlraumbildende, platzhaltende Bestandteile können ferner Vinylacetat-Ethylen-CopolymerPulver, Polyvinylalkohol-Pulver, Wachse, Holzpulver, Phenoplast-Pulver, Harnstoff-Formaldehyd-Harz-Pulver, Polyesterharz-Pulver, Proteine, Polysaccharide, Siliconharz-Pulver, Mikrohohlglaskugeln und Mischungen derselben eingesetzt werden. Abschließend erfolgt zur Herstellung der Mullit- bzw. Zirconiumsilicatphasen eine Temperung bei ca. 1.750°C.

100 g Bindemittel mit einem Feststoffgehalt von 60 Gew.-% nach A) werden mit 30 g chemisch oder physikalisch zersetzbaren oder oxidierbaren expandierbaren Komponenten versetzt. Parallel zum Härtungsprozess des Bindemittels wird der Zersetzungsprozess unter einer 3- bis 10-fachen Volumenexpansion des Bindemittels unter Ausbildung eines feinporigen, festen, hochtemperaturbeständigen Isolationsschaumes initiert. Als Blähmittel können z. B. Materialien wie Blähgraphit oder oder Substanzen wie Melamine, welche Stickstoff freisetzen, eingesetzt werden.

## Patentansprüche

1. Isolationsmaterial umfassend eine anorganische, poröse Matrix, das erhältlich ist, indem man eine Zusammensetzung, die a) ein Nanopartikel und/oder Polykondensate oder Vorstufen davon enthaltendes Sol als Bindemittel und b) feste Porenbildner umfasst, formt oder auf ein Substrat aufbringt und die Zusammensetzung unter Bildung der porösen Matrix und von durch den Porenbildner gebildeten, zusätzlichen Poren härtet.

2. Isolationsmaterial nach Anspruch 1, **dadurch gekennzeichnet, dass** der mittlere Porendurchmesser der zusätzlichen Poren größer als der der porösen Matrix ist.

3. Isolationsmaterial nach Anspruch 1 oder 2, **dadurch gekennzeichnet, dass** es sich bei der porösen Matrix um eine mikroporöse oder mesoporöse Matrix handelt.

4. Isolationsmaterial nach einem der Ansprüche 1 bis 3, **dadurch gekennzeichnet, dass** in der Zusammensetzung organische Verbindungen oder organische Gruppen enthalten sind, die zur Herstellung der anorganischen Matrix ausgebrannt werden.

5. Isolationsmaterial nach einem der Ansprüche 1 bis 4, **dadurch gekennzeichnet, dass** die zusätzlichen Poren Makroporen sind.

6. Isolationsmaterial nach einem der Ansprüche 1 bis 5, **dadurch gekennzeichnet, dass** die Zusammensetzung mindestens ein Teilchen aus Metalloxid, bevorzugt aus SiO₂ Al₂O₃, AIOOH, Ta₂O₅, TiO₂ und/oder ZrO₂, als Nanopartikel umfasst, wobei besonders bevorzugt zumindest ein Teil der oder alle Nanopartikel aus SiO₂ sind.

7. Isolationsmaterial nach einem der Ansprüche 4 bis 6, **dadurch gekennzeichnet, dass** die Zusammensetzung ein Nanokomposit aus Nanopartikeln, die mit organischen Verbindungen oder organische Gruppen enthaltenden Verbindungen oberflächenmodifiziert sind, als Bindemittel umfasst und die organischen Komponenten des Nanokomposits zur Bildung der Matrix ausgebrannt werden.

8. Isolationsmaterial nach Anspruch 7, **dadurch gekennzeichnet, dass** das Nanokomposit durch Oberflächenmodifizierung der Nanopartikel mit einer oder mehreren Verbindungen ausgewählt aus hydrolysierbaren Silanen mit mindestens einer nicht hydrolysierbaren, organischen Gruppe, Carbonsäuren, Anhydriden, Amiden, Aminverbindungen, Iminen, β-Diketonen, Aminosäuren und Proteinen erhalten wird.

9. Isolationsmaterial nach einem der Ansprüche 1 bis 7, **dadurch gekennzeichnet, dass** das Nanokomposit durch Oberflächenmodifizierung der Nanopartikel mit einem oder mehreren Silanen der allgemeinen Formel
RₙSiX₄₋ₙ (I)
worin die Gruppen X gleich oder verschieden sind und hydrolysierbare Gruppen oder Hydroxylgruppen sind, die Reste R gleich oder verschieden sind und Alkyl, Alkenyl, Alkinyl, Aryl, Aralkyl oder Alkylaryl sind und n 0, 1, 2 oder 3 ist, erhalten wird, wobei vorzugsweise für mindestens ein Silan n größer als 0 ist.

10. Isolationsmaterial nach Anspruch 9, **dadurch gekennzeichnet, dass** das Nanokomposit durch Oberflächenmodifizierung der Nanopartikel mit mindestens einem Silan der Formel
RₙSiX₄₋ₙ (I)
worin n = 1 oder 2 ist, und mindestens einem Silan der Formel
SiX₄ (II)
worin X wie in Formel (I) definiert ist, erhalten wird.

11. Isolationsmaterial nach einem der Ansprüche 1 bis 10, **dadurch gekennzeichnet, dass** die Zusammensetzung als Polykondensate oder Vorstufe davon Hydrolyseprodukte oder Kondensationsprodukte von einer oder mehreren hydrolysierbaren Verbindungen von glas- oder keramikbildenden Metallen umfasst.

12. Isolationsmaterial nach Anspruch 11, **dadurch gekennzeichnet, dass** mindestens eine hydrolysierbare Verbindung mindestens einen nicht hydrolysierbaren Substituenten aufweist.

13. Isolationsmaterial nach Anspruch 11 oder 12, **dadurch gekennzeichnet, dass** mindestens eine hydrolysierbare Verbindung aus Si-, Al-, B-, Sn-, Ti-, Zr-, Mg-, V- und Zn-Verbindungen ausgewählt ist.

14. Isolationsmaterial nach einem der Ansprüche 1 bis 13, **dadurch gekennzeichnet, dass** das Bindemittelsol Polykondensate oder eine Vorstufe davon und oberflächenmodifizierte Nanopartikel umfasst.

15. Isolationsmaterial nach einem der Ansprüche 1 bis 14, **dadurch gekennzeichnet, dass** die Zusammensetzung mindestens eine refraktäre Komponente umfasst.

16. Isolationsmaterial nach einem der Ansprüche 1 bis 15, **dadurch gekennzeichnet, dass** als Porenbildner Teilchen verwendet werden, die hohl sind und/oder aus einem wärmezersetzbaren oder verdampfbaren Material bestehen oder ein Blähmittel sind.

17. Isolationsmaterial nach Anspruch 16, **dadurch gekennzeichnet, dass** die Zusammensetzung Hohlkörper als Porenbildner umfasst.

18. Isolationsmaterial nach Anspruch 17, **dadurch gekennzeichnet, dass** der Hohlkörper aus Glas oder Kunststoff ist.

19. Isolationsmaterial nach einem der Ansprüche 1 bis 17, **dadurch gekennzeichnet, dass** die Zusammensetzung wärmezersetzbare oder verdampfbare Teilchen umfasst, die unter Bildung der zusätzlichen Poren thermisch zersetzt oder verdampft werden.

20. Isolationsmaterial nach Anspruch 19, **dadurch gekennzeichnet, dass** wärmezersetzbare oder verdampfbare Teilchen aus einem Metallnitrat, einem organischen Salz, NH₄Cl, Ruß, Mehl, Holzmehl, Wachs, Protein, Polysaccharid, Siliconharz oder Kunststoff verwendet werden.

21. Isolationsmaterial nach einem der Ansprüche 19 und 20, **dadurch gekennzeichnet, dass** die wärmezersetzbaren oder verdampfbaren Teilchen hohl sind.

22. Isolationsmaterial nach einem der Ansprüche 1 bis 21, **dadurch gekennzeichnet, dass** die geformte oder aufgetragene Zusammensetzung bei einer Temperatur von mindestens 40°C wärmebehandelt wird, um die Zusammensetzung zu härten.

23. Isolationsmaterial nach einem der Ansprüche 1 bis 22, **dadurch gekennzeichnet, dass** die geformte oder aufgetragene Zusammensetzung in mindestens zwei Stufen mit unterschiedlicher Temperatur wärmebehandelt wird.

24. Isolationsmaterial nach Anspruch 22 oder 23, **dadurch gekennzeichnet, dass** die Zusammensetzung bei einer Temperatur von mindestens 100°C, bevorzugt mindestens 150°C, zur Zwischenhärtung oder Aushärtung wärmebehandelt wird.

25. Isolationsmaterial nach einem der Ansprüche 22 bis 24, **dadurch gekennzeichnet, dass** die Zusammensetzung bei einer Temperatur von mindestens 300°C, bevorzugt mindestens 350°C, ausgehärtet wird.

26. Isolationsmaterial nach einem der Ansprüche 4 bis 25, **dadurch gekennzeichnet, dass** die Zusammensetzung mindestens ein organisches Monomer, Oligomer oder Polymer als Additiv zur Kontrolle der Viskosität und/oder der Bindungsfestigkeit des Formkörpers umfasst.

27. Isolationsmaterial nach einem der Ansprüche 1 bis 26, **dadurch gekennzeichnet, dass** es als Formkörper oder als Beschichtung auf einem Substrat vorliegt.

28. Verfahren zur Herstellung eines Isolationsmaterials mit einer anorganischen, porösen Matrix, in welchem man eine Zusammensetzung, die a) ein Nanopartikel und/oder Polykondensate oder Vorstufen davon enthaltendes Sol als Bindemittel und b) feste Porenbildner umfasst, formt oder auf ein Substrat aufbringt und die Zusammensetzung unter Bildung der porösen Matrix und von durch den Porenbildner gebildeten zusätzlichen Poren härtet.

29. Verwendung eines Isolationsmaterials nach einem der Ansprüche 1 bis 27 für die Wärme- und Kälteisolation, für eine Kombination von Isolation und Brandschutz oder für die thermische Kapselung temperatursensitiver Komponenten.

## Claims

1. An insulation material which comprises an inorganic, porous matrix and is obtainable by shaping a composition comprising a) a sol comprising nanoparticles and/or polycondensates or precursors thereof as binder and b) solid pore formers or applying this composition to a substrate and curing the composition to form the porous matrix and additional pores formed by means of the pore former.

2. The insulation material as claimed in claim 1, **characterized in that** the mean pore diameter of the additional pores is greater than that of the porous matrix.

3. The insulation material as claimed in claim 1 or 2, **characterized in that** the porous matrix is a microporous or mesoporous matrix.

4. The insulation material as claimed in any of claims 1 to 3, **characterized in that** organic compounds or organic groups which can be burned out to produce the inorganic matrix are present in the composition.

5. The insulation material as claimed in any of claims 1 to 4, **characterized in that** the additional pores are macropores.

6. The insulation material as claimed in any of claims 1 to 5, **characterized in that** the nanoparticles comprise at least one metal oxide, preferably SiO₂, Al₂O₃, AIOOH, Ta₂O₅, TiO₂ and/or ZrO₂, with particular preference being given to at least part of or all nanoparticles being composed of SiO₂.

7. The insulation material as claimed in any of claims 4 to 6, **characterized in that** the composition comprises a nanocomposite composed of nanoparticles which have been surface-modified by means of organic compounds or compounds containing organic groups as binder and the organic components of the nanocomposite are burned out to form the matrix.

8. The insulation material as claimed in claim 7, **characterized in that** the nanocomposite is obtained by modifying the surface of the nanoparticles by means of one or more compounds selected from among hydrolyzable silanes having at least one non-hydrolyzable, organic group, carboxylic acids, anhydrides, amides, amine compounds, imines, β-diketones, amino acids and proteins.

9. The insulation material as claimed in any of claims 1 to 7, **characterized in that** the nanocomposite is obtained by modifying the surface of the nanoparticles by means of one or more silanes of the general formula
RₙSiX₄₋ₙ (I)
where the groups X are identical or different and are hydrolyzable groups or hydroxyl groups, the radicals R are identical or different and are each alkyl, alkenyl, alkynyl, aryl, aralkyl or alkylaryl and n is 0, 1, 2 or 3, with n preferably being greater than 0 for at least one silane.

10. The insulation material as claimed in claim 9, **characterized in that** the nanocomposite is obtained by modifying the surface of the nanoparticles by means of at least one silane of the formula
RₙSiX₄₋ₙ (I)
where n = 1 or 2, and at least one silane of the formula
SiX₄ (II)
where X is as defined in formula (I).

11. The insulation material as claimed in any of claims 1 to 10, **characterized in that** the composition comprises hydrolysis products or condensation products of one or more hydrolyzable compounds of glass- or ceramic-forming metals as polycondensates or precursors thereof.

12. The insulation material as claimed in claim 11, **characterized in that** at least one hydrolyzable compound has at least one non-hydrolyzable substituent.

13. The insulation material as claimed in claim 11 or 12, **characterized in that** at least one hydrolyzable compound is selected from among Si, Al, B, Sn, Ti, Zr, Mg, V and Zn compounds.

14. The insulation material as claimed in any of claims 1 to 13, **characterized in that** the binder sol comprises polycondensates or a precursor thereof and surface-modified nanoparticles.

15. The insulation material as claimed in any of claims 1 to 14, **characterized in that** the composition comprises at least one refractory component.

16. The insulation material as claimed in any of claims 1 to 15, **characterized in that** particles which are hollow and/or comprise a thermally decomposable or vaporizable material or are an intumescent agent are used as pore formers.

17. The insulation material as claimed in claim 16, **characterized in that** the composition comprises hollow bodies as pore formers.

18. The insulation material as claimed in claim 17, **characterized in that** the hollow body is composed of glass or plastic.

19. The insulation material as claimed in any of claims 1 to 17, **characterized in that** the composition comprises thermally decomposable or vaporizable particles which are thermally decomposed or vaporized to form the additional pores.

20. The insulation material as claimed in claim 19, **characterized in that** thermally decomposable or vaporizable particles composed of a metal nitrate, an organic salt, NH₄Cl, carbon black, flour, wood flour, wax, protein, polysaccharide, silicone resin or plastic are used.

21. The insulation material as claimed in claim 19 or 20, **characterized in that** the thermally decomposable or vaporizable particles are hollow.

22. The insulation material as claimed in any of claims 1 to 21, **characterized in that** the shaped or applied composition is heat-treated at a temperature of at least 40°C to cure the composition.

23. The insulation material as claimed in any of claims 1 to 22, **characterized in that** the shaped or applied composition is heat-treated in at least two stages having different temperatures.

24. The insulation material as claimed in claim 22 or 23, **characterized in that** the composition is heat-treated at a temperature of at least 100°C, preferably at least 150°C, to effect intermediate curing or curing.

25. The insulation material as claimed in any of claims 22 to 24, **characterized in that** the composition is cured at a temperature of at least 300°C, preferably at least 350°C.

26. The insulation material as claimed in any of claims 4 to 25, **characterized in that** the composition comprises at least one organic monomer, oligomer or polymer as additive to control the viscosity and/or the binding strength of the molding.

27. The insulation material as claimed in any of claims 1 to 26, **characterized in that** it is in the form of a molding or a coating on a substrate.

28. A process for producing an insulation material comprising an inorganic, porous matrix, which comprises shaping a composition comprising a) a sol comprising nanoparticles and/or polycondensates or precursors thereof as binder and b) solid pore formers or applying this composition to a substrate and curing the composition to form the porous matrix and additional pores formed by means of the pore former.

29. The use of an insulation material as claimed in any of claims 1 to 27 for insulation against heat and cold, for a combination of insulation and fire protection or for thermal encapsulation of temperature-sensitive components.

## Revendications

1. Matériau d'isolation à matrice poreuse inorganique, qu'on peut obtenir en façonnant ou en déposant sur un substrat une composition qui contient :
a) un sol contenant des nanoparticules et/ou un produit de polycondensation ou ses précurseurs, servant de liant,
b) et un agent porogène solide,
et en faisant durcir cette composition, dans des conditions menant à la formation de la matrice poreuse et de pores supplémentaires engendrés par l'agent porogène.

2. Matériau d'isolation conforme à la revendication 1, **caractérisé en ce que** le diamètre moyen des pores supplémentaires est plus grand que celui des pores de la matrice poreuse.

3. Matériau d'isolation conforme à la revendication 1 ou 2, **caractérisé en ce que** la matrice poreuse est une matrice à micropores ou à mésopores.

4. Matériau d'isolation conforme à l'une des revendications 1 à 3, **caractérisé en ce qu'**il y a, dans la composition, des composés organiques ou des groupes organiques que l'on élimine par calcination pour préparer la matrice inorganique.

5. Matériau d'isolation conforme à l'une des revendications 1 à 4, **caractérisé en ce que** les pores supplémentaires sont des macropores.

6. Matériau d'isolation conforme à l'une des revendications 1 à 5, **caractérisé en ce que** la composition comprend au moins, en tant que nanoparticules, des particules d'au moins un oxyde métallique, de préférence de SiO₂, Al₂O₃, AlOOH, Ta₂O₅, TiO₂ et/ou ZrO₂, étant entendu qu'il est particulièrement avantageux qu'au moins une partie de ces nanoparticules ou toutes ces particules soient des particules de SiO₂.

7. Matériau d'isolation conforme à l'une des revendications 4 à 6, **caractérisé en ce que** la composition comprend, en tant que liant, un nanocomposite formé de nanoparticules dont la surface a été modifiée avec des composés organiques ou des composés contenant des groupes organiques et **en ce que** les composants organiques de ce nanocomposite sont éliminés par calcination lors de la formation de la matrice.

8. Matériau d'isolation conforme à la revendication 7, **caractérisé en ce que** le nanocomposite est obtenu par modification de la surface des nanoparticules au moyen d'un ou de plusieurs composés choisis parmi les silanes hydrolysables comportant au moins un groupe organique non-hydrolysable et les acides carboxyliques, anhydrides, amides, composés aminés, imines, β-dicétones, acides aminés et protéines.

9. Matériau d'isolation conforme à l'une des revendications 1 à 7, **caractérisé en ce que** le nanocomposite est obtenu par modification de la surface des nanoparticules au moyen d'un ou de plusieurs silanes de formule générale
RₙSiX₄₋ₙ (I)
dans laquelle les groupes représentés par X sont identiques ou différents et sont des groupes hydrolysables ou des groupes hydroxyle, les groupes représentés par R sont identiques ou différents et sont des groupes alkyle, alcényle, alcynyle, aryle, aryl-alkyle ou alkyl-aryle, et n vaut 0, 1, 2 ou 3, n étant de préférence supérieur à zéro chez au moins un silane.

10. Matériau d'isolation conforme à la revendication 9, **caractérisé en ce que** le nanocomposite est obtenu par modification de la surface des nanoparticules au moyen d'au moins un silane de formule
RₙSiX₄₋ₙ (I)
dans laquelle n vaut 1 ou 2, et d'au moins un silane de formule
SiX₄ (II)
dans laquelle X a la signification indiquée à propos de la formule (I).

11. Matériau d'isolation conforme à l'une des revendications 1 à 10, **caractérisé en ce que** la composition contient, en guise de produit de polycondensation ou de précurseurs d'un tel produit, des produits d'hydrolyse ou des produits de condensation d'un ou de plusieurs composés hydrolysables de métaux formateurs de verres ou de céramiques.

12. Matériau d'isolation conforme à la revendication 11, **caractérisé en ce qu'**au moins un composé hydrolysable comporte au moins un substituant non hydrolysable.

13. Matériau d'isolation conforme à la revendication 11 ou 12, **caractérisé en ce qu'**au moins un composé hydrolysable est choisi parmi les composés du silicium, de l'aluminium, du bore, de l'étain, du titane, du zirconium, du magnésium, du vanadium ou du zinc.

14. Matériau d'isolation conforme à l'une des revendications 1 à 13, **caractérisé en ce que** le sol servant de liant comprend un produit de polycondensation ou un précurseur d'un tel produit et des nanoparticules dont la surface a été modifiée.

15. Matériau d'isolation conforme à l'une des revendications 1 à 14, **caractérisé en ce que** la composition contient au moins un composant réfractaire.

16. Matériau d'isolation conforme à l'une des revendications 1 à 15, **caractérisé en ce qu'**on emploie comme agent porogène des particules qui sont creuses et/ou sont constituées d'un matériau qui peut se vaporiser ou se décomposer sous l'action de la chaleur ou constituent un agent d'expansion.

17. Matériau d'isolation conforme à la revendication 16, **caractérisé en ce que** la composition comprend des corps creux comme agent porogène.

18. Matériau d'isolation conforme à la revendication 17, **caractérisé en ce que** les corps creux sont en verre ou en matériau synthétique.

19. Matériau d'isolation conforme à l'une des revendications 1 à 17, **caractérisé en ce que** la composition comprend des particules qui peuvent se vaporiser ou se décomposer sous l'action de la chaleur et dont la vaporisation ou la décomposition thermique provoque la formation des pores supplémentaires.

20. Matériau d'isolation conforme à la revendication 19, **caractérisé en ce qu'**on emploie, en tant que particules qui peuvent se vaporiser ou se décomposer sous l'action de la chaleur, des particules formées d'un nitrate de métal, d'un sel organique ou de chlorure d'ammonium, ou des particules de noir de fumée, de farine, de sciure de bois, de cire, de protéines, de polysaccharides, de résine de silicone ou de matière synthétique.

21. Matériau d'isolation conforme à la revendication 19 ou 20, **caractérisé en ce que** les particules qui peuvent se vaporiser ou se décomposer sous l'action de la chaleur sont creuses.

22. Matériau d'isolation conforme à l'une des revendications 1 à 21, **caractérisé en ce que** l'on soumet la composition façonnée ou déposée à un traitement thermique réalisé à une température d'au moins 40 °C, pour faire durcir la composition.

23. Matériau d'isolation conforme à l'une des revendications 1 à 22, **caractérisé en ce que** l'on soumet la composition façonnée ou déposée à un traitement thermique réalisé en au moins deux étapes à différentes températures.

24. Matériau d'isolation conforme à la revendication 22 ou 23, **caractérisé en ce que** l'on soumet la composition, pour un durcissement intermédiaire ou un durcissement complet, à un traitement thermique réalisé à une température d'au moins 100 °C, et de préférence d'au moins 150 °C.

25. Matériau d'isolation conforme à l'une des revendications 22 à 24, **caractérisé en ce que** l'on complète le durcissement de la composition en la chauffant à une température d'au moins 300 °C, et de préférence d'au moins 350 °C.

26. Matériau d'isolation conforme à l'une des revendications 4 à 25, **caractérisé en ce que** la composition comprend au moins un monomère, oligomère ou polymère organique, en tant qu'adjuvant servant à ajuster la viscosité et/ou la résistance de liaison du corps façonné.

27. Matériau d'isolation conforme à l'une des revendications 1 à 26, **caractérisé en ce qu'**il se présente sous forme de corps façonné ou de couche appliquée sur un substrat.

28. Procédé de fabrication d'un matériau d'isolation à matrice poreuse inorganique, dans lequel on façonne ou l'on dépose sur un substrat une composition qui contient :
a) un sol contenant des nanoparticules et/ou un produit de polycondensation ou ses précurseurs, servant de liant,
b) et un agent porogène solide,
et l'on fait durcir cette composition, dans des conditions menant à la formation de la matrice poreuse et de pores supplémentaires engendrés par l'agent porogène.

29. Emploi d'un matériau d'isolation conforme à l'une des revendications 1 à 27 pour l'isolation vis-à-vis de la chaleur et du froid, pour une isolation associée à une protection contre les brûlures ou pour l'encapsulation de thermoprotection de composants thermosensibles.
